(19) Europäisches Patentamt
European Patent Office
Office européen des brevets

(11) **EP 3 734 475 A1**

(12) **EUROPEAN PATENT APPLICATION**
published in accordance with Art. 153(4) EPC

(43) Date of publication:
**04.11.2020 Bulletin 2020/45**

(21) Application number: **18897649.2**

(22) Date of filing: **06.11.2018**

(51) Int Cl.:
*G06F 17/16* (2006.01)   *G06N 3/08* (2006.01)

(86) International application number:
**PCT/CN2018/114209**

(87) International publication number:
**WO 2019/128475 (04.07.2019 Gazette 2019/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.12.2017 CN 201711488171**

(71) Applicant: **ZTE Corporation**
**shenzhen Guangdong 518057 (CN)**

(72) Inventor: **HAN, Bingtao**
**Shenzhen, Guangdong 518057 (CN)**

(74) Representative: **Aipex B.V.**
**P.O. Box 30223**
**3001 DE Rotterdam (NL)**

(54) **METHOD AND DEVICE FOR TRAINING DATA, STORAGE MEDIUM, AND ELECTRONIC DEVICE**

(57)     Provided are a method and device for training data, a storage medium and an electronic device. The method includes determining sample data and an available cluster resource; splitting an overall training model into sub-models; and training the sample data concurrently on the sub-models by using the cluster resource. The problem of excessively low efficiency in training sample data in the related art is solved.

FIG. 1

**Description**

This application is based on and claims priority to Chinese Patent Application No. 201711488171.3 filed Dec. 29, 2017, the disclosure of which is incorporated herein by reference in its entirety.

TECHNICAL FIELD

The present invention relates to the field of artificial intelligence and, in particular, to a method and device for training data, a storage medium and an electronic device.

BACKGROUND

In the related art, the training of deep learning models requires huge computing power, and the time required in completing one training session often amounts to several days or even several months. Therefore, to speed up the training of deep learning models, it is normal practice to increase processing equipment and optimize training models. However, the former brings about an increase in the input of network resources and the latter is difficult to achieve in a short time.

In view of the preceding problem in the related art, no effective solution has yet been proposed.

SUMMARY

Embodiments of the present invention provide a method and device for training data, a storage medium and an electronic device.

According to an embodiment of the present invention, a method for training data is provided. The method includes: determining sample data and an available cluster resource; splitting an overall training model into sub-models; and training the sample data concurrently on the sub-models by using the cluster resource.

According to another embodiment of the present invention, a device for training data is provided. The device includes: a determination module configured to determine sample data and an available cluster resource; a splitting module configured to split an overall training model into sub-models; and a training module configured to train the sample data concurrently on the sub-models by using the cluster resource.

According to another embodiment of the present invention, a storage medium is provided. The storage medium stores a computer program. When the computer program is executed, the steps in any one of the preceding method embodiments are performed.

According to another embodiment of the present invention, an electronic device is provided. The electronic device includes a memory and a processor. The memory stores a computer program. The processor is configured to execute the computer program to perform the steps in any one of the preceding method embodiments.

In the present invention, an overall training model is split into sub-models and then sample data is trained concurrently on the sub-models. In this manner, the problem of excessively low efficiency in training sample data in the related art is solved, and the speed at which sample data is trained is improved with no increase in network resources.

BRIEF DESCRIPTION OF DRAWINGS

The drawings described herein are used to provide a further understanding of the present invention and form a part of the present application. The illustrative embodiments and the description thereof in the present invention are used to explain the present invention and not to limit the present invention in an improper manner. In the drawings:

FIG. 1 is a flowchart of a method for training data according to an embodiment of the present invention;

FIG. 2 is a block diagram illustrating the structure of a device for training data according to an embodiment of the present invention;

FIG. 3 is a schematic diagram of a parallel algorithm according to an embodiment of the present invention;

FIG. 4 is a schematic diagram of an input-based splitting scheme according to an embodiment of the present invention;

FIG. 5 is a schematic diagram of a Split-Concat operator optimization scheme according to an embodiment of the present invention;

FIG. 6 is a schematic diagram of a parameter-based splitting scheme according to an embodiment of the present invention; and

FIG. 7 is an interaction flowchart according to an embodiment of the present invention.

DETAILED DESCRIPTION

The present invention will be hereinafter described in detail with reference to drawings in conjunction with embodiments. It is to be noted that if not in collision, the embodiments described herein and the features in the embodiments may be combined with each other.

It is to be noted that the terms "first", "second" and the like in the description, claims and drawings of the present invention are used to distinguish between similar objects and are not necessarily used to describe a particular order or sequence.

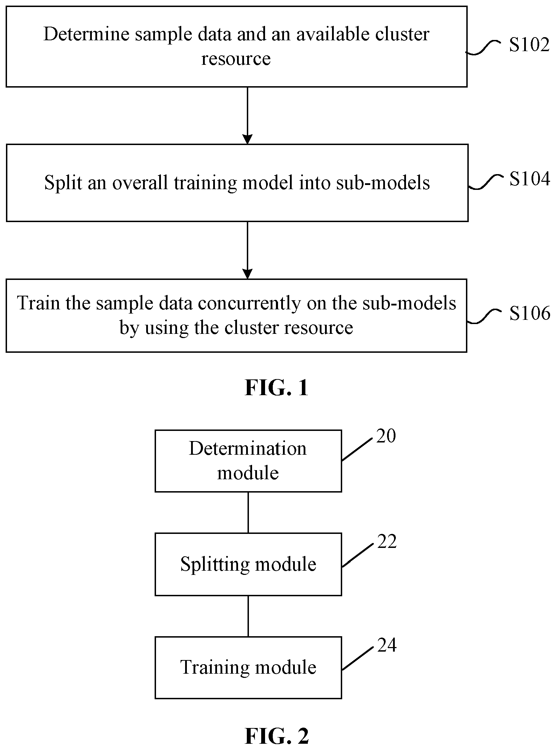

In this embodiment, a method for training data is provided. FIG. 1 is a flowchart of a method for training data according to this embodiment of the present invention. As shown in FIG. 1, the method includes the steps below.

In step S102, sample data and an available cluster resource are determined.

In step S104, an overall training model is split into sub-models.

In step S106, the sample data is trained concurrently on the sub-models by using the cluster resource.

In the preceding steps, an overall training model is split into sub-models and then sample data is trained concurrently on the sub-models. In this manner, the problem of excessively low efficiency in training sample data in the related art is solved, and the speed at which sample data is trained is improved with no increase in network resources.

In some embodiments, the preceding steps may, but not necessarily, be performed by a server, a data processing system, a cluster platform or the like, and may be applied in the scenarios of deep learning models and neural network models.

In some embodiments, splitting the overall training model into the sub-models includes at least one of splitting the overall training model into first sub-models, where the first sub-models are connected in parallel; or splitting the overall training model into second sub-models, where the second sub-models are connected in series.

In some embodiments, splitting the overall training model into the first sub-models includes at least one of splitting the overall training model into the first sub-models according to indication information, where the indication information may be input by a user or generated by a system; or splitting the overall training model into the first sub-models according to the type of an operator, where the overall training model is composed of at least one operator.

In an example, splitting the overall training model into the first sub-models according to the indication information includes the steps below.

In S11, indication information is acquired. The indication information is used for indicating the batch size of the overall training model. The batch size is used for describing how many training samples are input in one step.

In S12, the overall training model is split into N first sub-models whose inputs are (B/N) × I. B denotes a first batch dimension. The size of the first batch dimension is the same as the batch size. I denotes the dimension of the input vector of the overall training model. N denotes an integer greater than 1. The first sub-models include sub-density operators.

In another example, splitting the overall training model into the first sub-models according to the type of the operator includes the steps below.

In S21, the type of the operator is acquired. The type of the operator includes a density (Dense) operator and a convolution (Conv) operator.

In S22, the density operator is split into N sub-density operators whose calculation parameters are (I/N) × O, where the sub-density operators and the density operator have the same input tensor, O denotes the dimension of the output vector of the density operator, I denotes the dimension of the input vector of the density operator, and N denotes an integer greater than 1; and the convolution operator is split into N sub-convolution operators, where the sub-convolution operators and the convolution operator have the same input tensor. One sub-density operator includes multiple calculation parameters. The first sub-models include at least one of the sub-density operators or the sub-convolution operators.

In some embodiments, splitting the overall training model into the second sub-models includes the steps below.

In S31, the overall training model is parsed so that multiple operators are obtained. The overall training model includes a Concat operator and a Split operator. A Concat operator and a Split operator adjacent to each other in series form a first Concat-Split operator pair.

In S32, in a case where in the first Concat-Split operator pair an input tensor of the Concat operator and an output tensor of the Split operator are same, the Concat operator and the Split operator in the first Concat-Split operator pair are deleted from the overall training model and then the overall training model is split into the second sub-models.

In this embodiment, determining the sample data and the available cluster resource includes receiving a training job and acquiring corresponding sample data from the training job; and determining a first processor that is currently idle in a cluster, receiving specified second-processor information, and determining an available processor resource in the first processor according to the second-processor information, where the cluster resource includes the processor resource. The processor may be a CPU, a GPU, an MPU or the like.

In this embodiment, training the sample data concurrently on the sub-models by using the cluster resource includes dividing the sample data into M slices, and then inputting the slices to M × K sub-models of the cluster resource concurrently for training the slices. K denotes the minimum cluster resource required for configuration of one sub-model, M denotes an integer greater than 0, and K denotes an integer greater than 0. According to the values of M and K, the following three modes of parallelism may be performed: data parallelism, model parallelism and mixed parallelism. When M is greater than 1, data parallelism is performed. When the M different slices are input to the sub-models concurrently and K is greater than 1, model parallelism is performed, that is, K sub-models are used concurrently to process one slice. Hybrid parallelism means the combination of data parallelism and model parallelism.

From the description of the preceding implementations, it will be apparent to those skilled in the art that the method of any one of the preceding embodiments may be implemented by use of software plus a necessary general-purpose hardware platform, or may, of course, be implemented by hardware, but in many cases, the former is a preferred implementation. Based on this understanding, the solution provided in the present invention substantially, or the part contributing to the existing art, may be embodied in the form of a software product. The software product is stored in a storage medium (such as a ROM/RAM, a magnetic disk or an optical disk) and includes several instructions for enabling a terminal (which may be a mobile phone, a computer, a server or a network device) to perform the method according to each embodiment of the present invention.

An embodiment provides a device for training data. The device is used for implementing the preceding embodiments and preferred implementations, and what has been described will not be repeated in this embodiment. As used below, the term "module" may be software, hardware or a combination thereof capable of implementing preset functions. The device in the embodiment described below is preferably implemented by software, but implementation by hardware or by a combination of software and hardware is also possible and conceived.

FIG. 2 is a block diagram illustrating the structure of the device for training data according to this embodiment of the present invention. As shown in FIG. 2, the device includes a determination module 20, a splitting module 22 and a training module 24.

The determination module 20 is configured to determine sample data and an available cluster resource.

The splitting module 22 is configured to split an overall training model into sub-models.

The training module 24 is configured to train the sample data concurrently on the sub-models by using the cluster resource.

Optionally, the splitting module includes at least one of a first splitting unit or a second splitting unit. The first splitting unit is configured to split the overall training model into first sub-models. The first sub-models are connected in parallel. The second splitting unit is configured to split the overall training model into second sub-models. The second sub-models are connected in series.

It is to be noted that the preceding modules may be implemented by software or hardware. Implementation by hardware may, but not necessarily, be performed in the following manner: the preceding modules are located in the same processor or the preceding modules are located in any combination in their respective processors.

This embodiment is an optional embodiment of the present invention and is used for describing the present application in detail in conjunction with model instances.

To speed up the training of a deep learning model, it is feasible to use the method of parallel computing.

That is, one training session is split into subparts and computing of the subparts is performed concurrently on different computing devices so that the training is speeded up. Parallel computing for deep learning includes two parallel algorithms: data parallelism and model parallelism. It is needed to select a suitable parallel algorithm according to the characteristics of the model and computing clusters.

In this embodiment, a method and system are provided such that a suitable parallel algorithm can be selected according to the characteristics of the deep learning model and the characteristics of the high-performance clusters and original deep learning model can be transformed automatically so that greater computing parallelism can be achieved and the training speed can be faster. This method is used for enabling the deep learning model to perform parallel training automatically on high-performance computing clusters.

The problem to be solved in this embodiment is to implement automatic parallel training of a deep learning model. A user only needs to specify the number of the nodes (for example, GPU in this embodiment) used by training a model and the model (for example, deep neural network (DNN), convolutional neural network (CNN) or recurrent neural network (RNN)) to be trained. The system automatically selects a parallel training algorithm and transforms the model accordingly to improve the parallelism of the algorithm as much as possible, thereby achieving efficient parallel training.

This embodiment provides a system for implementing automatic training of a deep learning model. The system includes four modules: an application manager, a resource manager, a job scheduler and an executor. The function of each module in the method is described in detail below.

The application manager is a service process running on a high-performance computing (HPC) cluster to manage a training job, including job starting and job stopping and control the work of other modules.

The resource manager is a service process running on an HPC cluster to determine which algorithm to use to train the deep learning model submitted by a user and allocate corresponding resources on the HPC cluster. This process includes the algorithm and process below.

In step A, the memory size M available to nodes (GPUs) on an HPC cluster is acquired.

In step B, the number D of the nodes specified by a user is acquired.

In step C, the memory size R required for a deep learning model is calculated in the following manner: all operators of the deep learning model are traversed and the sizes of the output tensors of all operators plus the sizes of all parameters in the model are calculated by using the formula below.

$$R = \gamma S * \left( \sum_{i \in OP} \text{size}(\text{out}(i)) + \sum_{j \in Params} \text{size}(j) \right)$$

In the formula, size(out(i)) denotes the size of the output of operator i, size(j) denotes the size of parameter j, and S denotes the size of the data type. For example, the size of float32 is 4. Float32 is an additional memory factor for a video memory. The memory actually required for different frameworks is larger than the calculated video memory. The default value is 1.1.

In step D, an allocation granularity G is determined. The allocation granularity is the minimum number of GPUs required for accommodating one model. To reduce fragmentation, the allocation granularity is limited to an integer power of 2, that is, 1, 2, 4, 8, .... Therefore, the final allocation granularity is as calculated below.

$$G = 2^N$$

$$N = \min\{n | 2^N > ceil(R/N)\}$$

In step E, data parallelism (DP) is determined. The data parallelism indicates the number of slices into which the overall training data is split. The data parallelism is calculated by using the formula DP = floor(D/G).

In step F, based on G and DP, the total number A of resource nodes (GPUs) allocated on the HPC is calculated by using the formula A = DP × G.

If the DP specified by the user is limited to only an integer power of 2, A is equal to the number DP of the nodes specified by the user.

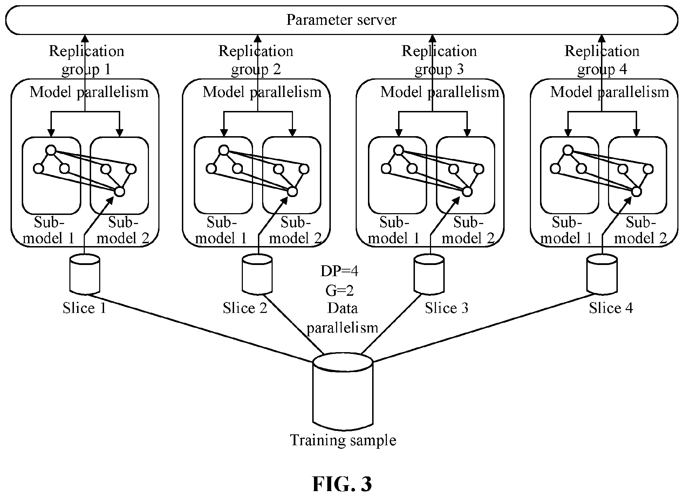

According to different DPs and Gs, the parallel training algorithm is divided into data parallelism, model parallelism and hybrid parallelism. The method is as follows: multiple nodes form one replication group, the nodes in the replication group are trained by using model parallelism, and G defines the number of nodes included in the replication group; one training job includes multiple replication groups, training is performed between replication groups by using data parallelism, and DP defines the number of replication groups included in one training job. FIG. 3 is a schematic diagram of a parallel algorithm according to an embodiment of the present invention.

Each training task contains one job scheduler process that is responsible for transforming a deep learning model to improve the parallelism of the deep learning model and then assigning models obtained from splitting to multiple executors to achieve distributed parallel training.

The method of improving the parallelism of deep learning is to perform splitting based on operators. That is, one operator is split into multiple operators and parallel computing of the operators obtained from splitting is enabled on different nodes so that computing concurrency is improved. Two splitting methods are provided: input-based splitting and parameter-based splitting.

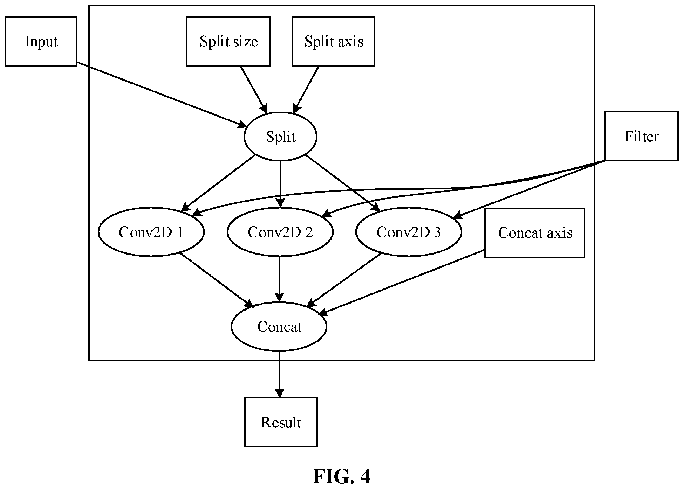

FIG. 4 is a schematic diagram of an input-based splitting scheme according to an embodiment of the present invention. Size denotes the amount of size. Axis denotes a coordinate axis. Conv2D 1, Conv2D 2 and Conv2D 3 denote illustrative first two-dimensional convolution, second two-dimensional convolution and third three-dimensional convolution respectively. In the method of input-based splitting, in each step of deep learning, a user specifies a batch size, that is, the number of input training samples in one step. When inputting to a neural network is performed, the number of training samples is increased by one batch dimension. The size of the batch dimension is batch size. For example, if the input of the original operator is an I-dimensional vector, the output of the original operator is an O-dimensional vector, and the batch size is B, then the input can be expressed as a B × I tensor. One operator that receives an input of a B × I tensor may be split into N operators, where each of the N operators receives an input of a (B/N) × I tensor. To achieve the equivalence of the original operator to the operators obtained from splitting, it is needed to add a Split operator and a Concat operator. The Split operator is responsible for splitting the original input of the B × I tensor into N (B/N) × I tensors as inputs of the new N operators. The Concat operator is responsible for combining N (B/N) × I output tensors into one B × O tensor. In this manner, the equivalence of the original operator to the operators obtained from splitting is ensured.

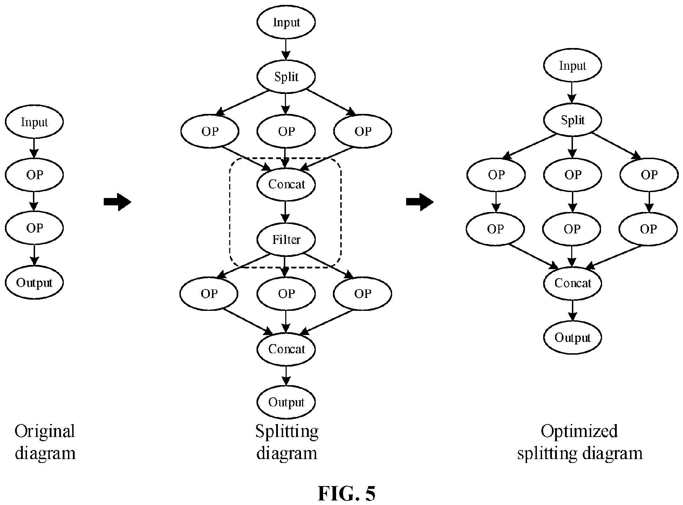

The method of input-based splitting can be optimized such that unnecessary Split-Concat operators can be reduced. FIG. 5 is a schematic diagram of a Split-Concat operator optimization scheme according to an embodiment of the present invention. OP denotes operator. If, in a Concat-Split operator pair formed by a Concat operator and a Split operator adjacent to each other, the dimension and size of the input tensor of the Concat operator are equal to the dimension and size of the output tensor of the Split operator and the in-degree of the Concat is equal to the out-degree of the Split, then the Concat operator and the Split operator in the Concat-Split operator pair can be deleted.

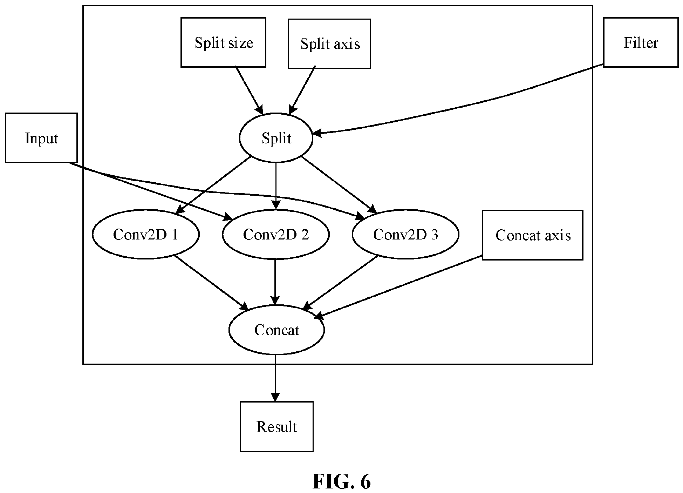

FIG. 6 is a schematic diagram of a parameter-based splitting scheme according to an embodiment of the present invention. Parameter-based splitting includes implementing different splitting schemes according to the type of operators. For a density operator, if the size of the input tensor is B × I and the size of the parameter tensor is I × O, then the size of the output tensor is B × O. If the original density operator is split into N density operators, the input of each density operator is still B × I, and the parameter tensor is split into I × (O/N), then the size of the output tensor of each operator is B × (O/N). To achieve the equivalence of the original operator to the operators obtained from splitting, it is needed to add a Split operator and a Concat operator. The Split operator is responsible for splitting the I × O parameter tensor into N I $\times$ (O/N) parameter tensors. The Concat operator is responsible for combining N B $\times$ (O/N) output tensors into one B $\times$ O tensor. In this manner, the equivalence of the original operator to the operators obtained from splitting is ensured.

For a convolution operator, another allocation scheme is adopted. That is, splitting is performed in a Channel dimension. That is, a B $\times$ H $\times$ W $\times$ C input tensor is split into B $\times$ H $\times$ W $\times$ (C/N) tensors and an H $\times$ W $\times$ C parameter tensor is split into N H $\times$ W $\times$ (C/N) parameter tensors. Finally, the obtained N B $\times$ H $\times$ W $\times$ (C/N) output tensors are combined into one B $\times$ H $\times$ W $\times$ C output tensor in the Channel dimension. In this manner, the equivalence of the original operator to the operators obtained from splitting is ensured.

Each worker node contains an executor process that is responsible for training the (partial) deep learning model allocated to this node. Each executor is divided into two types: Worker and Parameter Server for parameter training of the respective model and parameter summary of the respective model respectively.

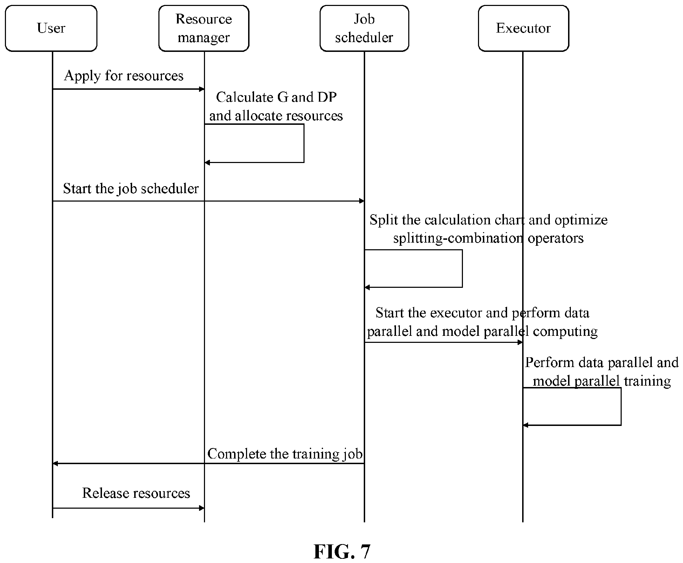

An embodiment provides a method for automatic parallel training of a deep learning model on an HPC cluster. In this method, a suitable algorithm can be selected automatically for parallel training of the deep learning models and improving the parallelism of the algorithm, thereby ensuring efficient training in deep learning. FIG. 7 is an interaction flowchart according to an embodiment of the present invention. The method includes the steps below.

In step A, a user submits a training job to an application manager and specifies a deep learning model to be trained and the number of nodes desired to be used, and the application manager sends the submitted and specified data to a resource manager.

In step B, the resource manager calculates an allocation granularity G and data parallelism DP and determines a parallel algorithm (data parallelism, model parallelism or hybrid parallelism) through G and DP; and allocates idle nodes to this training job on an HPC according to G and DP.

In step C, the application manager starts a job scheduler and transfers the model submitted by the user, the resources allocated by the resource manager, and the parameters of the resources.

In step D, the job scheduler splits the model into G sub-models based on the allocation granularity G by using the method of input-based splitting or the method of parameter-based splitting, and then performs Split-Concat operator optimization of the G sub-models.

In step E, the job scheduler starts DP $\times$ G executors, and each G executors form one execution group on which training is performed by using model parallelism; the data is split into DP slices and trained on DP execution groups by using data parallelism.

In step F, the execution of all executors is completed, the application manager obtains the final trained model, and the training job is deleted so that the resources are released.

With the solution of this embodiment, a corresponding efficient scheme of parallel computing can be automatically generated according to the characteristics of the deep learning model and the characteristics of high-performance clusters in the case where a user simply specifies the desired number of GPUs, thereby achieving the purpose of both saving the investment in algorithm research and development and training the model faster.

An embodiment of the present invention provides a storage medium. The storage medium stores a computer program. When the computer program is executed, the steps in any one of the preceding method embodiments are performed.

In some embodiments, the preceding storage medium may be configured to store a computer program for performing the steps below.

In S1, sample data and an available cluster resource are determined.

In S2, an overall training model is split into sub-models.

In S3, the sample data is trained concurrently on the sub-models by using the cluster resource.

In some embodiments, the storage medium may include, but is not limited to, a U disk, a read-only memory (ROM), a random-access memory (RAM), a mobile hard disk, a magnetic disk, an optical disk or another medium capable of storing a computer program.

An embodiment of the present invention provides an electronic device that includes a memory and a processor. The memory stores a computer program and the processor is configured to execute the computer program to perform the steps in any one of the preceding method embodiments.

In some embodiments, the electronic device may further include a transmission device and an input and output device. The transmission device is connected to the processor. The input and output device is connected to the processor.

It is understandable that the memory may be a volatile memory or a non-volatile memory or may include both the volatile memory and the non-volatile memory. The non-volatile memory may be a read-only memory (ROM), a programmable read-only memory (PROM), an erasable programmable read-only memory (EPROM), an electrically erasable programmable read-only memory (EEPROM), a ferromagnetic random-access memory (FRAM), a flash memory, a magnetic surface memory, an optical disk or a compact disc read-only memory (CD-ROM). The magnetic surface memory may be a magnetic disk memory or a magnetic tape memory. The volatile memory may be a random-access memory (RAM), which serves as an external cache. By way of an exemplary description rather than a limited description, many forms of RAMs may be used, such as a static random-access memory (SRAM), a synchronous static random-access memory (SSRAM), a dynamic random-access memory (DRAM), a synchronous dynamic random-access memory (SDRAM), a double data rate synchronous dynamic random-access memory (DDRSDRAM), an enhanced synchronous dynamic random-access memory (ESDRAM), a SyncLink dynamic random-access memory (SLDRAM) and a direct Rambus random-access memory (DRRAM). The memory 702 described in this embodiment of the present invention is intended to include, but is not limited to, these memories and any other suitable type of memory.

The methods disclosed by the preceding embodiments of the present invention may be applied to a processor or may be implemented by the processor. The processor may be an integrated circuit chip with signal processing capabilities. In the implementation process, various steps in the preceding methods may be performed by an integrated logic circuit of hardware or software instructions in the processor. The processor may be a general-purpose processor, a digital signal processor (DSP), a programmable logic device, a discrete gate or transistor logic device, discrete hardware components, or the like. The processor may implement or execute various methods, steps and logic block diagrams disclosed in embodiments of the present invention. The general-purpose processor may be a microprocessor or any conventional processor. The steps in the methods disclosed by embodiments of the present invention may be directly implemented by a hardware decoding processor or may be implemented by a combination of hardware and software modules in the decoding processor. The software modules may be located in a storage medium located in the memory. The processor reads information in the memory and implements the steps in the methods in combination with the hardware of the processor.

In an exemplary embodiment, the electronic device may be implemented by one or more application-specific integrated circuits (ASICs), DSPs, programmable logic devices (PLDs), complex programmable logic devices (CPLDs), field-programmable gate arrays (FPGAs), general-purpose processors, controllers, micro controller units (MCUs), microprocessors, or other electronic elements for executing the preceding methods.

In some embodiments, the preceding processor may be configured to execute the steps below through a computer program.

In S1, sample data and an available cluster resource are determined.

In S2, an overall training model is split into sub-models.

In S3, the sample data is trained concurrently on the sub-models by using the cluster resource.

For examples in this embodiment, reference may be made to the examples described in the preceding embodiments and optional implementations, and the examples will not be repeated in this embodiment.

Apparently, it is to be understood by those skilled in the art that the modules or steps of the present invention may be implemented by at least one general-purpose computing device and may be concentrated on a single computing device or distributed in a network formed by multiple computing devices. Optionally, these modules or steps may be implemented by program codes executable by the at least one computing device. Thus, these modules or steps may be stored in a storage medium and executed by the at least one computing device. Moreover, in some cases, the illustrated or described steps may be executed in a sequence different from the sequence described herein. Alternatively, each of these modules or steps may be implemented by being made into an integrated circuit module or multiple ones of these modules or steps may be implemented by being made into a single integrated circuit module. In this manner, the present invention is not limited to any specific combination of hardware and software.

The above are only preferred embodiments of the present invention and are not intended to limit the present invention. For those skilled in the art, the present invention may have various modifications and variations. Any modifications, equivalent substitutions, improvements and the like made within the principle of the present invention are within the scope of the present invention.

## Claims

1. A method for training data, comprising:

   determining sample data and an available cluster resource;
   splitting an overall training model into a plurality of sub-models; and
   training the sample data concurrently on the plurality of sub-models by using the cluster resource.

2. The method of claim 1, wherein splitting the overall training model into the plurality of sub-models comprises at least one of:

   splitting the overall training model into a plurality of first sub-models, wherein the plurality of first sub-models are connected in parallel; or
   splitting the overall training model into a plurality of second sub-models, wherein the plurality of second sub-models are connected in series.

3. The method of claim 2, wherein splitting the overall training model into the plurality of first sub-models comprises:
   splitting the overall training model into the plurality of first sub-models according to a type of an operator, wherein the overall training model is composed of at least one operator.

4. The method of claim 3, wherein splitting the overall training model into the plurality of first sub-models according to the type of the operator comprises:

acquiring the type of the operator, wherein the type of the operator comprises a density operator; and
splitting the density operator into N sub-density operators whose inputs are (B/N) $\times$ I, wherein B denotes a first batch dimension, a size of the first batch dimension is the same as an indicated batch size, I denotes a dimension of an input vector of the density operator, and N denotes an integer greater than 1, wherein the plurality of first sub-models comprise the sub-density operators.

5. The method of claim 3, wherein splitting the overall training model into the plurality of first sub-models according to the type of the operator comprises:

acquiring the type of the operator, wherein the type of the operator comprises a density operator; and
splitting the density operator into N sub-density operators whose calculation parameters are I $\times$ (O/N), wherein an input tensor of each of the sub-density operators is the same as an input tensor of the density operator, O denotes a dimension of an output vector of the density operator, I denotes a dimension of an input vector of the density operator, and N denotes an integer greater than 1, wherein the plurality of first sub-models comprise the sub-density operators.

6. The method of claim 3, wherein splitting the overall training model into the plurality of first sub-models according to the type of the operator comprises:

acquiring the type of the operator, wherein the type of the operator comprises a convolution operator; and
splitting the convolution operator into N sub-convolution operators, wherein an input tensor of each of the sub-convolution operators is the same as an input tensor of the convolution operator, wherein the plurality of first sub-models comprise the sub-convolution operators.

7. The method of claim 2, wherein splitting the overall training model into the plurality of second sub-models comprises:

parsing the overall training model to obtain a plurality of operators, wherein the overall training model comprises Concat operators and Split operators, and a Concat operator and a Split operator adjacent to each other in series form a first Concat-Split operator pair; and

in a case where in the first Concat-Split operator pair an input tensor of the Concat operator and an output tensor of the Split operator are same, deleting the Concat operator and the Split operator in the first Concat-Split operator pair from the overall training model and then splitting the overall training model into the plurality of second sub-models.

8. The method of claim 1, wherein determining the sample data and the available cluster resource comprises:

receiving a training job and acquiring corresponding sample data from the training job; and
determining a first processor that is currently idle in a cluster, receiving specified second-processor information, and determining an available processor resource in the first processor according to the second-processor information, wherein the cluster resource comprises the processor resource.

9. The method of claim 1, wherein training the sample data concurrently on the plurality of sub-models by using the cluster resource comprises:

dividing the sample data into M slices, and then inputting the slices to M $\times$ K sub-models of the cluster resource concurrently for training the slices,
wherein K denotes a minimum cluster resource required for configuring one of the plurality of sub-models, M denotes an integer greater than 0, and K denotes an integer greater than 0.

10. A device for training data, comprising:

a determination module, which is configured to determine sample data and an available cluster resource;
a splitting module, which is configured to split an overall training model into a plurality of sub-models; and
a training module, which is configured to train the sample data concurrently on the plurality of sub-models by using the cluster resource.

11. The device of claim 10, wherein the splitting module comprises at least one of:

a first splitting unit, which is configured to split the overall training model into a plurality of first sub-models, wherein the plurality of first sub-models are connected in parallel; or
a second splitting unit, which is configured to split the overall training model into a plurality of second sub-models, wherein the plurality of second sub-models are connected in series.

12. A storage medium storing a computer program, wherein when the computer program is executed, the method of any one of claims 1 to 9 is performed.

13. An electronic device, comprising: a processor and a memory for storing a computer program executable on the processor, wherein the processor is configured to perform steps in the method of any one of claims 1 to 9 when executing the computer program.

Determine sample data and an available cluster resource — S102

Split an overall training model into sub-models — S104

Train the sample data concurrently on the sub-models by using the cluster resource — S106

**FIG. 1**

Determination module — 20

Splitting module — 22

Training module — 24

**FIG. 2**

FIG. 3

**FIG. 4**

Original
diagram

Splitting
diagram

Optimized
splitting diagram

**FIG. 5**

**FIG. 6**

| User | Resource manager | Job scheduler | Executor |
|---|---|---|---|

Apply for resources

Calculate G and DP and allocate resources

Start the job scheduler

Split the calculation chart and optimize splitting-combination operators

Start the executor and perform data parallel and model parallel computing

Perform data parallel and model parallel training

Complete the training job

Release resources

**FIG. 7**

## INTERNATIONAL SEARCH REPORT

International application No.

**PCT/CN2018/114209**

### A. CLASSIFICATION OF SUBJECT MATTER

G06F 17/16(2006.01)i; G06N 3/08(2006.01)i

According to International Patent Classification (IPC) or to both national classification and IPC

### B. FIELDS SEARCHED

Minimum documentation searched (classification system followed by classification symbols)

G06F; G06N

Documentation searched other than minimum documentation to the extent that such documents are included in the fields searched

Electronic data base consulted during the international search (name of data base and, where practicable, search terms used)

CNABS, CNKI, DWPI, SIPOABS: 数据训练, 深度学习, 模型, 集群, 算子, data training, deep learning, model, cluster, operator

### C. DOCUMENTS CONSIDERED TO BE RELEVANT

| Category* | Citation of document, with indication, where appropriate, of the relevant passages | Relevant to claim No. |
|---|---|---|
| X | CN 106033554 A (INSTITUTE OF ACOUSTICS, CHINESE ACADEMY OF SCIENCES ET AL.) 19 October 2016 (2016-10-19)<br>description, paragraphs [0028]-[0043], and figures 1-2 | 1, 2, 8, 10-13 |
| A | CN 106033554 A (INSTITUTE OF ACOUSTICS, CHINESE ACADEMY OF SCIENCES ET AL.) 19 October 2016 (2016-10-19)<br>description, paragraphs [0028]-[0043], and figures 1-2 | 3-7, 9 |
| A | CN 106529682 A (BEIJING QIHOO TECHNOLOGY CO., LTD. ET AL.) 22 March 2017 (2017-03-22)<br>entire document | 1-13 |
| A | US 2017116520 A1 (NEC LAB AMERICA INC.) 27 April 2017 (2017-04-27)<br>entire document | 1-13 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 January 2019** | **13 February 2019** |

| Name and mailing address of the ISA/CN | Authorized officer |
|---|---|
| **National Intellectual Property Administration, PRC (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/114209**

| Patent document cited in search report | | | Publication date (day/month/year) | Patent family member(s) | | | Publication date (day/month/year) |
|---|---|---|---|---|---|---|---|
| CN | 106033554 | A | 19 October 2016 | EP | 3270329 | A1 | 17 January 2018 |
| | | | | JP | 2018511870 | A | 26 April 2018 |
| | | | | WO | 2016145675 | A1 | 22 September 2016 |
| | | | | US | 2018068215 | A1 | 08 March 2018 |
| | | | | EP | 3270329 | A4 | 04 April 2018 |
| CN | 106529682 | A | 22 March 2017 | None | | | |
| US | 2017116520 | A1 | 27 April 2017 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201711488171